# EUROPEAN PATENT SPECIFICATION

(11) **EP 3 795 250 B1**
(45) Date of publication and mention of the grant of the patent: **02.07.2025**
(21) Application number: 19803568.5
(22) Date of filing: 16.05.2019
(51) Int. Cl.: B01J 37/02, B01D 39/14, B01D 53/94, B01J 23/63, B01J 37/08, F01N 3/022, F01N 3/035, F01N 3/28, B01J 23/40, B01D 39/20, B01J 21/04, B01J 21/06, B01J 35/00, B01J 35/56, B01J 35/61, B01J 35/30

(54) **METHOD FOR MANUFACTURING EXHAUST GAS PURIFICATION CATALYST**
VERFAHREN ZUR HERSTELLUNG EINES ABGASREINIGUNGSKATALYSATORS
PROCÉDÉ DE FABRICATION D'UN CATALYSEUR DE PURIFICATION DE GAZ D'ÉCHAPPEMENT

(30) Priority: 17.05.2018 JP 2018095550
(43) Date of publication of application: 24.03.2021
(73) Proprietor: N.E. Chemcat Corporation, Tokyo 105-6124 (JP)
(72) Inventor: MOCHIZUKI, Hiroshi, Tokyo 105-6124 (JP); TAKAYAMA, Akito, Tokyo 105-6124 (JP)
(74) Representative: TBK
(86) International application number: PCT/JP2019/019435
(87) International publication number: WO 2019/221216

(56) References cited:
- EP-A1- 3 162 428
- WO-A1-2008/126861
- WO-A1-2016/160988
- JP-A- 2013 158 678
- JP-A- 2017 177 007
- US-A1- 2014 356 265

## Description

### Technical Field

The present invention relates to a method for producing an exhaust gas purifying catalyst.

### Background Art

A particulate material (PM) mainly containing carbon, and ash composed of incombustible components, and the like are contained in exhaust gas discharged from an internal combustion engine. The exhaust gas is known to cause air pollution. In a diesel engine relatively readily discharging a particulate material as compared with a gasoline engine, the amount of the particulate material discharged has been severely regulated. In recent years, also in the gasoline engine, the regulation of the amount of the particulate material discharged has been tightened.

A method in which a particulate filter is provided on an exhaust gas passage of an internal combustion engine in order to deposit and collect a particulate material has been known as means for reducing the amount of the particulate material discharged. In particular, in recent years, from the viewpoint of the space saving of a mounting space, and the like, in order to simultaneously achieve the suppression of the emission of the particulate material and the removal of harmful components such as carbon monoxide (CO), hydrocarbon (HC), and nitrogen oxide (NOₓ), a catalyst slurry is considered to be coated on the particulate filter, followed by firing, to provide a catalyst layer.

However, if the catalyst layer is provided in the particulate filter in which pressure loss is readily increased by the deposition of the particulate material from the beginning, the exhaust gas passage is narrower. This readily causes further increased pressure loss, which disadvantageously causes reduction in engine output. In order to solve such a problem, for example, Patent Literatures 1 to 3 propose that the types of catalyst layers and positions at which the catalyst layers are provided are devised for the purpose of suppression of an increase in pressure loss and improvement in exhaust gas purifying performance.

### Citation List

### Patent Literature

Patent Literature 1: WO2016/060048
Patent Literature 2: WO2016/060049
Patent Literature 3: WO2016/060050
US 2014/356265 A1 describes a diesel particulate, the filter comprising (a) a wall-flow filter substrate having a mean pore size, an inlet side, an outlet side, and a porous interior between the inlet and outlet sides; and (b) a catalyst composition coated from the outlet side of the substrate, wherein the catalyst composition has a d50 particle size distribution, wherein the d50 particle size distribution is greater than or equal to the mean pore size divided by 4.9, and wherein the inlet side is substantially free of a catalyst coating.
EP 3 162 428 A1 describes an exhaust gas purification device which includes a substrate of wall flow structure having a porous partition wall, and a catalyst layer held in internal pores of the partition wall. The catalyst layer contains, as a carrier, an OSC material having oxygen storage capacity and a noble metal supported on the carrier. In the thickness direction of the partition wall, the porosity of the internal pores in inlet regions is 25% or higher, and an average occupation ratio of the catalyst layer held in the internal pores is 75% or lower.

### Summary of Invention

### Technical Problem

Specifically, the following constitution is disclosed in Patent Literature 1. A first catalyst layer is formed in a partition wall on the side of an inlet-side cell, and a second catalyst layer is formed in a partition wall on the side of an outlet-side cell. The length of the first catalyst layer and the second catalyst layer is set to be shorter than the total length of the partition wall to provide higher purifying performance than that when the catalyst layer is extensively formed over the entire partition wall. The following constitution is disclosed in Patent Literature 2. A first catalyst layer is formed in a partition wall on the side of an inlet-side cell, and a second catalyst layer shorter than the total length of a partition wall is formed on the surface of the partition wall on the side of an outlet-side cell to allow purifying performance to be maintained and improved. Furthermore, the following constitution is disclosed in Patent Literature 3. An upstream coating region is provided in a partition wall on the side of an inlet-side cell, and a downstream coating region shorter than the total length of a partition wall is formed in a partition wall on the side of an outlet-side cell. Catalyst layers are unevenly distributed in the surface layer portion of the partition wall in the downstream coating region to allow purifying performance to be maintained and improved.

Thus, as a method for dividedly forming catalyst layers on an exhaust gas inflow side and an exhaust gas outflow side in a partition wall, a method is disclosed in which aspects such as a viscosity and solid content rate of a slurry are adjusted, and one of an inlet-side cell and an outlet-side cell is pressurized to produce a difference in pressure therebetween, thereby performing adjustment such that the slurry does not excessively penetrate into a partition wall. The method produces the difference in pressure between the inlet-side cell and the outlet-side cell, to produce an exhaust gas purifying catalyst in which the catalyst layers are formed at places where the slurry has been caused to penetrate into the partition wall.

Meanwhile, heretofore, a method for producing an exhaust gas purifying catalyst has not been sufficiently discussed, in which catalyst layers are biasedly located toward an inflow-side cell or an outflow-side cell side in the thickness direction of a partition wall.

The present invention has been made in view of the foregoing problems, and an object of the present invention is to provide a method for producing an exhaust gas purifying catalyst in which the exhaust gas purifying catalyst having catalyst layer biasedly located toward the side of an inflow-side cell or an outflow-side cell in the thickness direction of a partition wall can be readily produced. The exhibition of operations and effects which are derived from each configuration shown in the Description of Embodiments to be described later, and are not obtained by a conventional technique without being limited to the object here can also be positioned as another object of the present invention.

### Solution to Problem

The present inventors conducted continuous and intensive studies in order to solve the above-described problems. As a result, it was found that, by performing a drying step of introducing gas into a catalyst slurry with which a partition wall is impregnated from a specific direction, a catalyst layer can be biasedly located toward a thickness direction of the partition wall. The present invention is based on the findings. That is, the present invention provides various specific aspects to be described later.

[1] A method for producing an exhaust gas purifying catalyst for purifying exhaust gas discharged from an internal combustion engine, the method comprising:
   a step of preparing a wall flow type substrate in which an inflow-side cell having an open exhaust gas inflow-side end, and an outflow-side cell adjacent to the inflow-side cell and having an open exhaust gas outflow-side end are separated by a porous partition wall;
   a coating step of coating a catalyst slurry containing a catalytic metal on the partition wall;
   a drying step of introducing gas into the wall flow type substrate to dry the coated catalyst slurry; and
   a firing step of firing the dried catalyst slurry to form a catalyst layer,
   wherein, by introducing the gas from the exhaust gas inflow-side end or the exhaust gas outflow-side end, or alternately from both the exhaust gas inflow-side end and the exhaust gas outflow-side end in the drying step, the dried catalyst slurry is biasedly located toward a side of the inflow-side cell or the outflow-side cell into which the gas has been introduced, in a thickness direction of the partition wall.
[2] The method for producing an exhaust gas purifying catalyst according to [1], wherein the catalyst slurry is coated on the entire partition wall in the coating step.
[3] The method for producing an exhaust gas purifying catalyst according to [1] or [2], wherein, by introducing the gas only from the exhaust gas inflow-side end in the drying step, the dried catalyst slurry is biasedly located toward the side of the inflow-side cell into which the gas has been introduced, in the thickness direction of the partition wall.
[4] The method for producing an exhaust gas purifying catalyst according to [1] or [2], wherein, by introducing the gas only from the exhaust gas outflow-side end in the drying step, the dried catalyst slurry is biasedly located toward the side of the outflow-side cell into which the gas has been introduced, in the thickness direction of the partition wall.
[5] The method for producing an exhaust gas purifying catalyst according to [1] or [2], wherein, by introducing the gas alternately from both the exhaust gas inflow-side end and the exhaust gas outflow-side end in the drying step, the dried catalyst slurry is biasedly located toward the side of the outflow-side cell close to the exhaust gas inflow-side end into which the gas has been introduced, in the thickness direction of the partition wall, and the dried catalyst slurry is biasedly located toward the side of the outflow-side cell close to the exhaust gas outflow-side end into which the gas has been introduced.
[6] The method for producing an exhaust gas purifying catalyst according to any one of [1] to [5], wherein the catalyst slurry has a viscosity of 5 to 85 mPa·s.
[7] The method for producing an exhaust gas purifying catalyst according to any one of [1] to [6], wherein the catalyst slurry has a solid content rate of 1 to 50% by mass.
[8] The method for producing an exhaust gas purifying catalyst according to any one of [1] to [7], wherein the internal combustion engine is a gasoline engine.

### Advantageous Effects of Invention

The present invention can provide a method for producing an exhaust gas purifying catalyst, in which the exhaust gas purifying catalyst having a catalyst layer biasedly located toward a side of an inflow-side cell or an outflow-side cell in a thickness direction of a partition wall can be readily produced. The exhaust gas purifying catalyst obtained by the method can be utilized in not only a gasoline particulate filter (GPF) but also other particulate filter such as a diesel particulate filter (DPF), as a particulate filter supporting a catalyst, to achieve further improved performance of an exhaust gas treatment system mounted with such a particulate filter.

### Brief Description of Drawings

[Figure 1] Figure 1 is a process diagram schematically showing a method for producing an exhaust gas purifying catalyst of the present embodiment.
[Figure 2] Figure 2 is a process diagram schematically showing a drying step in the method for producing an exhaust gas purifying catalyst of the present embodiment.
[Figure 3] Figure 3 is a cross-sectional view schematically showing an exhaust gas purifying catalyst obtained when gas F is introduced only from an exhaust gas inflow-side end 11a in the method for producing an exhaust gas purifying catalyst of the present embodiment.
[Figure 4] Figure 4 is a cross-sectional view schematically showing an exhaust gas purifying catalyst obtained when gas F is introduced only from an exhaust gas outflow-side end 12a in the method for producing an exhaust gas purifying catalyst of the present embodiment.
[Figure 5] Figure 5 is a cross-sectional view schematically showing an exhaust gas purifying catalyst obtained when gas F is introduced alternately from both the exhaust gas inflow-side end 11a and the exhaust gas outflow-side end 12a in the method for producing an exhaust gas purifying catalyst of the present embodiment.

### Description of Embodiments

Hereinafter, an embodiment of the present invention will be described in detail. The following embodiment is one example (representative example) of the embodiment of the present invention, and the present invention is not limited thereto. Modifications of the present invention may be arbitrarily made without departing from the scope thereof. Herein, positional relationships such as upper, lower, left, and right are based on those shown in the drawings unless otherwise specified. The dimensional ratio of the drawings is not limited to the ratio of illustration. Herein, a "D50 particle size" refers to a particle size when an accumulated value from a small particle size reaches 50% of the total in a volume-based particle size cumulative distribution. A "D90 particle size" refers to a particle size when an accumulated value from a small particle size reaches 90% of the total in a volume-based particle size cumulative distribution. Herein, in the case of the expression with "to" sandwiched between numerical values or physical property values before and after "to", "to" is used to include the values before and after "to". For example, the description of the numerical value range "1 to 100" includes both the upper limit value "100" and the lower limit value "1". The same applies to the description of other numerical value ranges.

### [Method for Producing Exhaust Gas Purifying Catalyst]

A method for producing an exhaust gas purifying catalyst of the present embodiment is a method for producing an exhaust gas purifying catalyst 100 for purifying exhaust gas discharged from an internal combustion engine, the method including: a step S0 of preparing a wall flow type substrate 10 in which an inflow-side cell 11 having an open exhaust gas inflow-side end 11a, and an outflow-side cell 12 adjacent to the inflow-side cell 11 and having an open exhaust gas outflow-side end 12a are separated by a porous partition wall 13; a coating step S1b of coating a catalyst slurry 21a containing a catalytic metal on the partition wall 13; a drying step S1c of drying the coated catalyst slurry 21a by introducing gas F into the wall flow type substrate 10 after coating; and a firing step of forming catalyst layer 21 by firing the dried catalyst slurry 21a', wherein, by introducing the gas F from the exhaust gas inflow-side end 11a or the exhaust gas outflow-side end 12a, or alternately from both the exhaust gas inflow-side end 11a and the exhaust gas outflow-side end 12a in the drying step S1c, the dried catalyst slurry 21a' is biasedly located toward a side of the inflow-side cell 11 or the outflow-side cell 12 into which the gas F has been introduced, in a thickness direction of the partition wall 13.

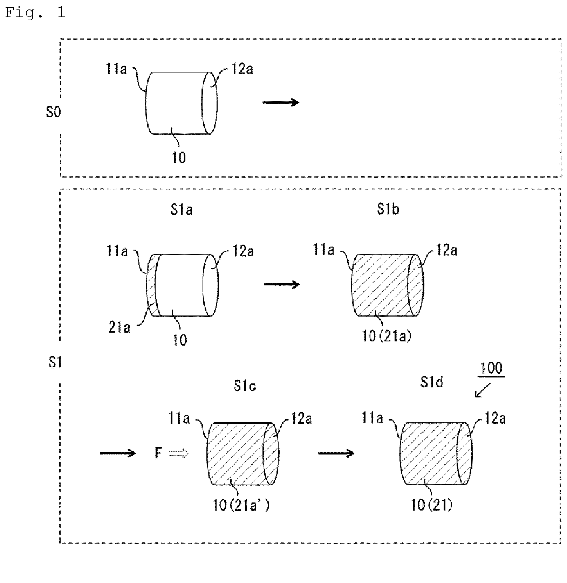

Hereinafter, each of the steps will be described with reference to a process diagram schematically showing a method for producing an exhaust gas purifying catalyst of the present embodiment shown in Figure 1. Herein, a wall flow type substrate before the catalyst layer 21 is formed is represented as "substrate 10", and a wall flow type substrate after the catalyst layer 21 is formed is represented as "exhaust gas purifying catalyst 100."

### <Preparing Step>

In the preparing step S0, the wall flow type substrate is prepared as a substrate. The wall flow type substrate 10 has a wall flow structure where the inflow-side cell 11 having the open exhaust gas inflow-side end 11a and the outflow-side cell 12 adjacent to the inflow-side cell 11 and having the open exhaust gas outflow-side end 12a are partitioned by the porous partition wall 13.

As the substrate, those conventionally used for this type of application and made of various materials and forms can be used. For example, the substrate is preferably composed of heat-resistant material capable of accommodating, for example, the removal of a particulate material by high-temperature combustion as well as exposure to high-temperature (for example, 400°C or higher) exhaust gas produced when an internal combustion engine is operated under a high-load condition. Examples of the heat-resistant material include ceramics such as cordierite, mullite, aluminum titanate, and silicon carbide (SiC); and alloys such as stainless steel. The form of the substrate can be appropriately adjusted from the viewpoint of exhaust gas purifying performance and suppression of an increase in pressure loss, and the like. For example, the outer shape of the substrate may also be a cylindrical shape, an elliptical cylindrical shape, or a polygonal cylindrical shape. Depending on a space in which the substrate will be incorporated, and the like, the capacity of the substrate (total cell volume) is preferably 0.1 to 5 L, and more preferably 0.5 to 3 L. The total length of the substrate in the extending direction (the total length of the partition wall in the extending direction) is preferably 10 to 500 mm, and more preferably 50 to 300 mm.

The inflow-side cell 11 and the outflow-side cell 12 are regularly arranged along the axis direction of the cylindrical shape. For cells adjacent to each other, the open end of one in the extending direction and the open end of another one are alternately sealed off. The inflow-side cell 11 and the outflow-side cell 12 can be set to a suitable shape and size in consideration of the flow rate and components of the exhaust gas to be supplied. For example, the opening shape of the inflow-side cell 11 and outflow-side cell 12 may be a triangle; a rectangular shape such as a square, a parallelogram, a rectangle, or a trapezoid; other polygon such as a hexagon or an octagon; and a circle. The exhaust gas purifying catalyst 100 may have a high ash capacity (HAC) structure where the cross-sectional area of the inflow-side cell 11 and the cross-sectional area of the outflow-side cell 12 are made different from each other. The number of the inflow-side cells 11 and the number of the outflow-side cells 12 can be appropriately set so that the occurrence of the turbulent flow of the exhaust gas can be promoted and clogging due to fine particles and the like contained in the exhaust gas can be suppressed. The number of the inflow-side cells 11 and the number of the outflow-side cells 12 are not particularly limited, and preferably 31-62 cells per square cm (200-400 cpsi).

The partition wall 13 partitioning the cells adjacent to each other is not particularly limited as long as the partition wall 13 has a porous structure through which the exhaust gas can pass. The constitution of the partition wall 13 can be appropriately adjusted from the viewpoint of exhaust gas purifying performance, suppression of an increase in pressure loss, and improvement in the mechanical strength of a substrate, and the like. For example, when the catalyst layer 21 are formed on the surface of the pores in the partition wall 13 using a catalyst slurry to be described later, and a pore diameter (for example, modal diameter (the pore diameter having the largest appearance ratio in the frequency distribution of the pore diameter (maximum value of distribution))) and a pore volume are large, the blockage of the pores due to the catalyst slurry are less likely to occur, and the exhaust gas purifying catalyst to be obtained tends to be less likely to cause an increase in pressure loss. However, the collection ability of the particulate material tends to be reduced, and the mechanical strength of the substrate tends to be also reduced. Meanwhile, when the pore diameter and the pore volume are small, the pressure loss is likely to be increased. However, the collection ability of the particulate material tends to be improved, and the mechanical strength of the substrate tends to be also improved.

From the viewpoint, the pore diameter (modal diameter) of the partition wall 13 of the wall flow type substrate 10 before the catalyst layer 21 is formed is preferably 8 to 25 µm, more preferably 10 to 22 µm, and still more preferably 13 to 20 µm. The thickness of the partition wall 13 (a length in a thickness direction perpendicular to the extending direction) is preferably 6 to 12 mil, and more preferably 6 to 10 mil. Furthermore, the pore volume of the partition wall 13 provided by a mercury intrusion method is preferably 0.2 to 1.5 cm³/g, more preferably 0.25 to 0.9 cm³/g, and still more preferably 0.3 to 0.8 cm³/g. The porosity of the partition wall 13 provided by the mercury intrusion method is preferably 20 to 80%, more preferably 40 to 70%, and still more preferably 60 to 70%. The pore volume or the porosity is greater than or equal to the lower limit, whereby the increase in pressure loss tends to be further suppressed. The pore volume or the porosity is less than or equal to the upper limit, whereby the strength of the substrate tends to be further improved. The pore diameter (modal diameter), the pore volume, and the porosity mean values calculated by the mercury intrusion method under conditions described in the following Examples.

### <Catalyst Layer Forming Step>

This catalyst layer forming step S1 includes a coating step S1b of coating the catalyst slurry 21a containing a catalytic metal on the partition wall 13, and a drying step S1c of drying the coated catalyst slurry 21a by introducing gas F into the wall flow type substrate 10 after coating. In the drying step S1c, by introducing the gas F from the exhaust gas inflow-side end 11a and/or the exhaust gas outflow-side end 12a, the dried catalyst slurry 21a' is biasedly located toward the side of the inflow-side cell 11 or the outflow-side cell 12 into which the gas F has been introduced, in the thickness direction of the partition wall 13, and the dried catalyst slurry 21a' biasedly located toward the thickness direction of the partition wall 13 is then fired in a firing step S1d, to form the catalyst layer 21.

The method for coating the catalyst slurry 21a is not particularly limited, and examples thereof include a method in which a part of the substrate 10 is impregnated with the catalyst slurry 21a, to spread the catalyst slurry 21a over the entire partition wall 13 of the substrate 10. More specific examples thereof include a method including a step S1a of impregnating the exhaust gas inflow-side end 11a or the exhaust gas outflow-side end 12a of the substrate 10 with the catalyst slurry 21a, and a step S1b of introducing gas into the substrate 10 from the side of the end impregnated with the catalyst slurry 21a to coat the catalyst slurry 21a with which the substrate 10 is impregnated on the partition wall 13.

The impregnation method of the catalyst slurry 21a in the impregnating step S1a is not particularly limited, and examples thereof include a method in which an end of the substrate 10 is immersed in the catalyst slurry 21a. In the method, the catalyst slurry 21a may be pulled up by discharging (suctioning) gas from its opposite end if needed. The end impregnated with the catalyst slurry 21a may be the exhaust gas inflow-side end 11a or the exhaust gas outflow-side end 12a. The exhaust gas inflow-side end 11a is preferably impregnated with the catalyst slurry 21a. This makes it possible to introduce the gas in the step S1b in the same direction as the introduction direction of the exhaust gas, whereby the catalyst slurry 21a can be coated along the flow of the exhaust gas so as to correspond to a complicated pore shape. Therefore, the suppression of the increase in the pressure loss of the exhaust gas purifying catalyst to be obtained can be anticipated, and improvement in exhaust gas purifying performance can also be expected.

In the coating step S1b, the impregnated catalyst slurry 21a moves deeply along the flow of the gas F from the introduction side of the substrate 10, and reaches the outflow-side end of the gas F. In the process, the catalyst slurry 21a passes through the pores of the partition wall 13, whereby the catalyst slurry 21a can be coated in the pores to coat the catalyst slurry 21a on the entire partition wall.

However, the method is comparatively suitable for the catalyst slurry 21a having a relatively low viscosity and readily penetrating into the pores in the partition wall 13 according to capillarity. A catalyst slurry having a relatively high viscosity such that the catalyst slurry is less likely to penetrate into the pores in the partition wall 13 according to capillarity is less likely to move in the partition wall 13, so that the introduction of the gas into the substrate 10 from the side of the end may make it difficult to coat the catalyst slurry 21a containing a catalytic metal on the entire partition wall 13.

In the drying step S1c, by introducing the gas F into the substrate 10, the coated catalyst slurry 21a is dried to produce the dried catalyst slurry 21a'. The drying condition in the drying step S1c is not particularly limited as long as a solvent is volatilized from the catalyst slurry 21a. For example, a drying temperature is preferably 100 to 225°C, more preferably 100 to 200°C, and still more preferably 125 to 175°C. A drying time is preferably 0.5 to 2 hours, and more preferably 0.5 to 1.5 hours.

In the drying step S1c, by introducing the gas F from the exhaust gas inflow-side end 11a and/or the exhaust gas outflow-side end 12a, the drying of the catalyst slurry 21a is promoted from the surface side of the partition wall 13 with which the introduced gas F is brought into contact. This causes the dried catalyst slurry 21a' to be biasedly located toward the side of the inflow-side cell 11 or the outflow-side cell 12 into which the gas F has been introduced, in the thickness direction of the partition wall 13.

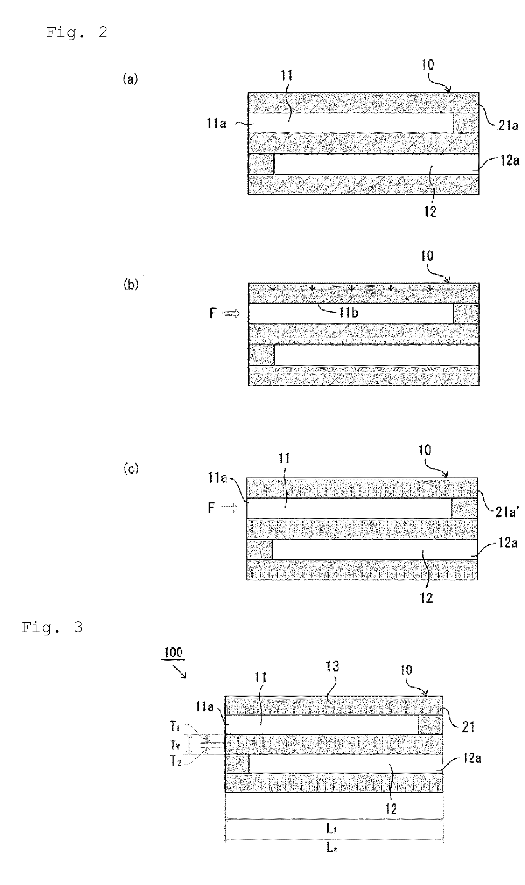

A mechanism in which the dried catalyst slurry 21a' is biasedly located toward the side of the inflow-side cell 11 or the outflow-side cell 12 into which the gas F has been introduced is not particularly limited, and will be considered as follows. In a state where the catalyst slurry 21a is substantially uniformly coated on the entire partition wall 13 of the substrate 10 (Figure 2 (a)) after the step S1b, the gas F is introduced into the substrate 10 from the exhaust gas inflow-side end 11a in the step S1c to promote drying, whereby the catalyst slurry 21a is gathered by capillarity from the undried partition wall 13 portion to the dried portion (Figure 2(b)). As a result, the dried catalyst slurry 21a' is biasedly located toward the dried portion (Figure 2(c)).

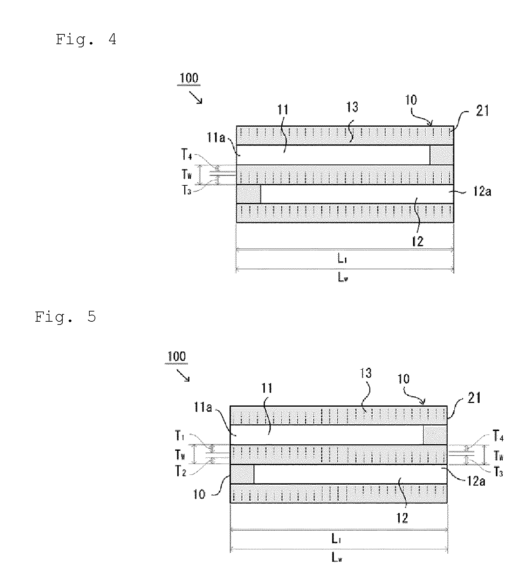

When the gas F is introduced only from the exhaust gas inflow-side end 11a in the drying step S1c as one aspect, the dried catalyst slurry 21a' is biasedly located toward the side of the inflow-side cell 11 into which the gas F has been introduced, in the thickness direction of the partition wall 13 (Figure 3). By introducing the gas F only from the exhaust gas outflow-side end 12a in the drying step S1c as another aspect, the dried catalyst slurry 21a' is biasedly located toward the side of the outflow-side cell 12 into which the gas F has been introduced, in the thickness direction of the partition wall 13 (Figure 4).

When the gas F is introduced alternately from both the exhaust gas inflow-side end 11a and the exhaust gas outflow-side end 12a in the drying step S1c as other aspect, the same phenomenon as that in the case where the gas F is introduced from one of the ends 11a and 12a occurs in that the catalyst slurry 21a is readily biasedly located toward the partition wall 13 portion which is brought into contact with both the cells into which the gas F has been introduced. However, the influence of the introduction of the gas F on the uneven distribution is stronger as closer to the introduction position of the gas F, and weaker as away from the introduction position of the gas F. Therefore, when attention is paid to the inflow-side cell 11, the uneven distribution of the dried catalyst slurry 21a' tends to significantly appear as closer to the end 11a into which the gas F has been introduced, and the uneven distribution of the dried catalyst slurry 21a' tends to be more gentle as farther from the end 11a. Similarly, when attention is paid to the outflow-side cell 12, the uneven distribution of the dried catalyst slurry 21a' tends to significantly appear as closer to the exhaust gas outflow-side end 12a into which the gas F has been introduced, and the uneven distribution of the dried catalyst slurry 21a' tends to be more gentle as farther from the end 12a (Figure 5). If the amount of the gas F introduced is set at the same level when the gas F is introduced into the substrate 10 alternately from both the exhaust gas inflow-side end 11a and the exhaust gas outflow-side end 12a to promote drying, symmetric uneven distribution can be provided as shown in Figure 5. However, if the amount of the gas F introduced from one end is relatively reduced, the catalyst slurry 21a can also be more biasedly located toward a portion close to the exhaust gas inflow-side end 11a or a portion close to the exhaust gas outflow-side end 12a.

Examples of the method in which the gas F is introduced alternately from both the exhaust gas inflow-side end 11a and the exhaust gas outflow-side end 12a in the drying step S1c include a method in which gas is introduced from one end, and the blow direction of the gas is then reversed to introduce gas from other end. In this case, the blow direction can be reversed at specific time intervals, to sequentially introduce the gas into the exhaust gas inflow-side end 11a and the exhaust gas outflow-side end 12a.

However, the method is suitable for the catalyst slurry 21a having a relatively low viscosity and readily penetrating into the pores in the partition wall 13 according to capillarity. Meanwhile, for example, a catalyst slurry which does not penetrate into the pores in the partition wall according to capillarity and has a relatively high viscosity such that the catalyst slurry is less likely to penetrate into the pores in the partition wall 13 according to capillarity is less likely to move in the partition wall 13. Therefore, even if adjustment and coating can be performed such that the slurry does not excessively penetrate into the partition wall by producing a difference in pressure between an inlet-side cell and an outlet-side cell, the method makes it difficult to bias toward the dried catalyst slurry 21a'.

As described above, in the firing step S1d, the biased dried catalyst slurry 21a' is fired in the thickness direction of the partition wall 13 to form the catalyst layer 21. A firing condition in the step S1d is not particularly limited as long as the catalyst layer 21 can be formed from the dried catalyst slurry 21a'. For example, a firing temperature is not particularly limited, and preferably 400 to 650°C, more preferably 450 to 600°C, and still more preferably 500 to 600°C. A firing time is preferably 0.5 to 2 hours, and more preferably 0.5 to 1.5 hours.

### (Catalyst Slurry)

The catalyst slurry 21a for forming the catalyst layer 21 will be described. The catalyst slurry 21a contains a catalyst powder and a solvent such as water. The catalyst powder is a population of a plurality of catalyst particles containing catalytic metal particles and carrier particles supporting the catalytic metal particles, and the catalyst layer 21 is formed through a firing step S1d to be described later. The catalyst particles are not particularly limited, and can be appropriately selected to be used from known catalyst particles.

From the viewpoint of having a relatively low viscosity such that the catalyst slurry 21a can penetrate into the pores in the partition wall 13 according to capillarity, the viscosity of the catalyst slurry 21a is preferably 5 to 85 mPa·s, more preferably 5 to 75 mPa·s, and still more preferably 5 to 50 mPa·s. From the same viewpoint, the solid content rate of the catalyst slurry 21a is preferably 1 to 50% by mass, more preferably 10 to 40% by mass, and still more preferably 15 to 30% by mass. The viscosity herein can be measured under conditions of 60 rpm and 25°C using a B-type viscometer (for example, RB-80L and the like, manufactured by Toki Sangyo Co., Ltd.).

The D90 particle size of the catalyst powder contained in the catalyst slurry 21a is preferably 1 to 7 µm, more preferably 1 to 6 µm, and still more preferably 1 to 5 µm. When the D90 particle size is 1 µm or more, a pulverization time when the catalyst powder is ground in a milling apparatus can be shortened, which tends to provide further improved work efficiency. When the D90 particle size is 7 µm or less, the blockage of the partition wall 13 by coarse particles is suppressed, which tends to suppress an increase in pressure loss. Herein, the D90 particle size can be measured with a laser diffraction particle size analyzer (for example, a laser diffraction particle size analyzer SALD-3100, manufactured by Shimadzu Corporation, and the like).

The catalytic metals contained in the catalyst slurry 21a are not particularly limited, and various metal species which can function as oxidation catalysts and reduction catalysts can be used. Examples thereof include platinum group metals such as platinum (Pt), palladium (Pd), rhodium (Rh), ruthenium (Ru), iridium (Ir), and osmium (Os). Among these, from the viewpoint of oxidation activity, palladium (Pd) and platinum (Pt) are preferable, and from the viewpoint of reduction activity, rhodium (Rh) is preferable.

From the viewpoint of increasing the area of contact with exhaust gas, the average particle size of the catalytic metal particles in the catalyst slurry 21a is preferably smaller. Specifically, the average particle size of the catalytic metal particles is preferably 1 to 15 nm, more preferably 1 to 10 nm, and still more preferably 1 to 7 nm. The average particle size of the catalytic metal particles can be confirmed by using, for example, a scanning transmission electron microscope (STEM) such as HD-2000 manufactured by Hitachi High-Technologies Corporation. Herein, the circle-equivalent diameters of ten randomly extracted catalytic metal particles are calculated, and the average value thereof is taken as the average particle size of the catalytic metal particles.

Inorganic compounds heretofore used for this type of exhaust gas purifying catalyst can be considered as carrier particles supporting catalytic metal particles. Examples thereof include oxygen storage capacity materials (OSC materials) such as cerium oxide (ceria: CeO₂) and ceria-zirconia composite oxide (CZ composite oxide), oxides such as aluminum oxide (alumina: Al₂O₃), zirconium oxide (zirconia: ZrO₂), silicon oxide (silica: SiO₂), and titanium oxide (titania: TiO₂), and composite oxides mainly containing the oxides. These may be composite oxides or solid solutions containing rare earth elements such as lanthanum and yttrium, transition metal elements, and alkaline-earth metal elements. These carrier particles may be used alone or in combination of two or more. Herein, the oxygen storage capacity material (OSC material) stores oxygen in the exhaust gas when the air-fuel ratio of the exhaust gas is lean (that is, an atmosphere on the oxygen excess side), and releases the stored oxygen when the air-fuel ratio of the exhaust gas is rich (that is, an atmosphere on the fuel excess side). From the viewpoint of exhaust gas purifying performance, the specific surface area of the carrier particles contained in the catalyst slurry is preferably 10 to 500 m²/g, and more preferably 30 to 200 m²/g.

From the viewpoint of improvement in the exhaust gas purifying performance, suppression of an increase in pressure loss, and suppression of the progression of the grain growth (sintering) of the catalytic metals, and the like, the supporting rate of the catalytic metals (the amount of the catalytic metals per substrate 1L) is preferably 0.05 to 10 g/L, more preferably 0.1 to 8 g/L, and still more preferably is 1 to 6 g/L.

The pore diameter (modal diameter) of the partition wall 13 of the exhaust gas purifying catalyst 100 provided by the mercury intrusion method, in a state where the catalyst layer 21 is formed is preferably 10 to 23 µm, more preferably 12 to 20 µm, and still more preferably 14 to 18 µm. The pore volume of the partition wall of the exhaust gas purifying catalyst provided by the mercury intrusion method, in a state where the in-pore stacked catalyst layer is formed is preferably 0.2 to 1.0 cm³/g, more preferably 0.25 to 0.9 cm³/g, and still more preferably 0.3 to 0.8 cm³/g. Furthermore, the porosity of the partition wall of the exhaust gas purifying catalyst provided by the mercury intrusion method, in a state where the in-pore stacked catalyst layer is formed is preferably 20 to 80%, more preferably 30 to 70%, and still more preferably 35 to 60%. The pore diameter (modal diameter), the pore volume, and the porosity mean values calculated by the mercury intrusion method under conditions described in the following Examples.

### [Exhaust Gas Purifying Catalyst]

In the exhaust gas purifying catalyst 100 obtained as described above, the catalyst layer 21 is biasedly located toward the side of the inflow-side cell 11 and/or the side of the outflow-side cell 12 into which the gas F has been introduced, in the thickness direction of the partition wall 13. Hereinafter, the constitution of the exhaust gas purifying catalyst 100 due to the difference in the introduction direction of the gas F in the drying step S1c will be described.

### (Case Where Gas F Is Introduced Only From Exhaust Gas Inflow-side End 11a)

In the case where the gas F is introduced only from the exhaust gas inflow-side end 11a in the drying step S1c, the catalyst layer 21 is formed at a plurality of places in the pores of the partition wall 13, and biasedly located toward the side of the inflow-side cell 11 into which the gas F has been introduced, in the thickness direction of the partition wall 13 (Figure 3). The aspect in which the catalyst layer 21 is unevenly distributed is not particularly limited, and the catalyst layer 21 preferably tends to have an increased amount supported as the catalyst layer is closer to a cell wall surface on the side of the inflow-side cell 11 in the thickness direction of the partition wall 13.

In one aspect showing such uneven distribution, when the wall thickness of the partition wall 13 is taken as Tw, 60% or more of the total mass of the catalyst layer 21 is preferably present in a depth region T1 between a cell wall surface on the side of the inflow-side cell 11 and a position separated by Tw*5/10 from the cell wall surface. The amount of the catalyst layer 21 supported in the depth region T1 is preferably 65% or more, more preferably 70% or more, and still more preferably 75% or more, based on the total mass of the catalyst layer 21 of the cross section of the partition wall 13.

In other aspect, when the wall thickness of the partition wall 13 is taken as Tw, 15% or less of the total mass of the catalyst layer 21 is preferably present in a depth region T2 between a cell wall surface on the side of the outflow-side cell 12 and a position separated by Tw*3/10 from the cell wall surface. The amount of the catalyst layer 21 supported in the depth region T2 is preferably 12% or less, more preferably 10% or less, and still more preferably 8% or less, based on the total mass of the catalyst layer 21 of the cross section of the partition wall 13.

As long as the catalyst layer 21 is biasedly located toward the side of the inflow-side cell 11 in the thickness direction of the partition wall 13, some of the catalyst layer 21 may be present on the side of the outflow-side cell 12. In other words, the catalyst layer 21 may be formed from the cell wall surface on the side of the inflow-side cell 11 toward the cell wall surface on the side of the outflow-side cell 12 in the thickness direction of the partition wall 13 as long as the catalyst layer 21 is biasedly located toward the side of the outflow-side cell 12 in the thickness direction of the partition wall 13. In this case, the catalyst layer 21 is formed over the entire thickness direction of the partition wall 13.

### (Case Where Gas F Is Introduced Only From Exhaust Gas Outflow-side End 12a)

In the case where the gas F is introduced only from the exhaust gas outflow-side end 12a in the drying step S1c, the catalyst layer 21 is formed at a plurality of places in the pores of the partition wall 13, and biasedly located toward the side of the outflow-side cell 12 into which the gas F has been introduced, in the thickness direction of the partition wall 13 (Figure 4). The aspect in which the catalyst layer 21 is unevenly distributed is not particularly limited, and the catalyst layer 21 preferably tends to have an increased amount supported as the catalyst layer is closer to a cell wall surface on the side of the outflow-side cell 12 in the thickness direction of the partition wall 13.

In one aspect showing such uneven distribution, when the wall thickness of the partition wall 13 is taken as Tw, 60% or more of the total mass of the catalyst layer 21 is preferably present in a depth region T3 between a cell wall surface on the side of the outflow-side cell 12 and a position separated by Tw*5/10 from the cell wall surface. The amount of the catalyst layer 21 supported in the depth region T3 is preferably 65% or more, more preferably 70% or more, and still more preferably 75% or more, based on the total mass of the catalyst layer 21 of the cross section of the partition wall 13.

In other aspect, when the wall thickness of the partition wall 13 is taken as Tw, 15% or less of the total mass of the catalyst layer 21 is preferably present in a depth region T4 between a cell wall surface on the side of the inflow-side cell 11 and a position separated by Tw*3/10 from the cell wall surface. The amount of the catalyst layer 21 supported in the depth region T4 is preferably 12% or less, more preferably 10% or less, and still more preferably 8% or less, based on the total mass of the catalyst layer 21 of the cross section of the partition wall 13.

As long as the catalyst layer 21 is biasedly located toward the side of the outflow-side cell 12 in the thickness direction of the partition wall 13, some of the catalyst layer 21 may be present on the side of the inflow-side cell 11. In other words, the catalyst layer 21 may be formed from the cell wall surface on the side of the inflow-side cell 11 toward the cell wall surface on the side of the outflow-side cell 12 in the thickness direction of the partition wall 13 as long as the catalyst layer 21 is biasedly located toward the side of the outflow-side cell 12 in the thickness direction of the partition wall 13. In this case, the catalyst layer 21 is formed over the entire thickness direction of the partition wall 13.

### (Case Where Gas F Is Introduced Alternately From Both Exhaust Gas Inflow-side End 11a And Exhaust Gas Outflow-side End 12a)

In the case where the gas F is introduced alternately from both the exhaust gas inflow-side end 11a and the exhaust gas outflow-side end 12a in the drying step S1c, the catalyst layer 21 is formed at a plurality of places in the pores of the partition wall 13. The catalyst layer 21 is biasedly located toward the side of the outflow-side cell 12 close to the exhaust gas inflow-side end 11a into which the gas F has been introduced, in the thickness direction of partition wall 13, and the catalyst layer 21 is biasedly located toward the side of the outflow-side cell 12 close to the exhaust gas outflow-side end 12a into which the gas F has been introduced (Figure 5). The aspect in which the catalyst layer 21 is unevenly distributed is not particularly limited. The catalyst layer 21 preferably tends to have an increased amount supported as the catalyst layer is closer to a cell wall surface on the side of the inflow-side cell 11 in a portion close to the exhaust gas inflow-side end 11a in the thickness direction of the partition wall 13. The catalyst layer 21 preferably tends to have an increased amount supported as the catalyst layer is closer to a cell wall surface on the side of the outflow-side cell 12 in a portion close to the exhaust gas outflow-side end 12a.

In the portion close to the exhaust gas inflow-side end 11a, in the depth regions T1 and T2, the same uneven distribution tendency as that in the case where the gas F is introduced only from the exhaust gas inflow-side end 11a is exhibited. In the portion close to the exhaust gas outflow-side end 12a, in the depth regions T3 and T4, the same uneven distribution tendency as that in the case where the gas F is introduced only from the exhaust gas outflow-side end 12a is exhibited.

In any of the introduction directions of the gas F, the uneven distribution of the catalyst layer 21 can be confirmed by observing the cross section of the partition wall 13 of the exhaust gas purifying catalyst 100 with a scanning electron microscope. Specifically, a portion occupied by the catalyst layer 21 is specified in a scanning electron microscope photograph of the cross section of the partition wall 13, and divided into ten in the thickness direction of the partition wall 13. The areas of the catalyst layer 21 can be integrated for every area to determine the uneven distribution of the catalyst layer. In this case, it is desirable that the areas are measured at at least three places, i.e., a portion of the partition wall 13 close to the exhaust gas inflow-side end 11a, a portion of the partition wall 13 close to the exhaust gas outflow-side end 12a, and a central portion therebetween, to obtain the average value of the areas.

In any of the introduction directions of the gas F, in the extending direction (length direction) of the partition wall 13, it is preferable that a range L1 in which the catalyst layer 21 is formed (the coating length of the catalyst layer 21) is entirely formed with a total length L_{W} of the wall flow type substrate 10 in the extending direction (the total length of the partition wall 13 in the extending direction) as 100%. Specifically, the ratio of the range L1 to the total length L_{W} is preferably 80 to 100%, more preferably 90 to 100%, and still more preferably 95 to 100%.

In the exhaust gas purifying catalyst 100 having a wall flow structure, the exhaust gas discharged from the internal combustion engine flows into the inflow-side cell 11 from the exhaust gas inflow-side end 11a (open), passes through the pores of the partition wall 13, flows into the adjacent outflow-side cell 12, and flows out of the exhaust gas outflow-side end 12a (open). In this process, a particulate material (PM) which is less likely to pass through the pores of the partition wall 13 is generally deposited on the partition wall 13 and/or in the pores of the partition wall 13 in the inflow-side cell 11. The deposited particulate material is burned and decomposed by the catalyst function of the catalyst layer 21 or at a predetermined temperature (for example, about 500 to 700°C). The exhaust gas is brought into contact with the catalyst layer 21 formed in the pores of the partition wall 13. This causes carbon monoxide (CO) and hydrocarbon (HC) contained in the exhaust gas to be oxidized to water (H₂O) or carbon dioxide (CO₂) or the like, causes nitrogen oxide (NOx) to be reduced to nitrogen (N₂), and causes harmful components to be purified (detoxified). Herein, removal of the particulate material and purification of the harmful components such as carbon monoxide (CO) are also collectively referred to as "exhaust gas purifying performance."

### [Application]

An air-fuel mixture containing oxygen and fuel gas is supplied into the internal combustion engine (engine), where the air-fuel mixture is burned to convert combustion energy into mechanical energy. At this time, the burned air-fuel mixture becomes exhaust gas and is discharged to the exhaust system. An exhaust gas purifying apparatus including an exhaust gas purifying catalyst is provided in the exhaust system. The exhaust gas purifying catalyst purifies harmful components (for example, carbon monoxide (CO), hydrocarbon (HC), and nitrogen oxides (NOx)) contained in the exhaust gas, and collects and removes a particulate material (PM) contained in the exhaust gas. In particular, the exhaust gas purifying catalyst of the present embodiment is preferably used for a gasoline particulate filter (GPF) which can collect and remove the particulate material contained in the exhaust gas of the gasoline engine.

### Examples

Hereinafter, the features of the present invention will be described further specifically by way of Test Examples, Examples, and Comparative Examples, but the present invention is in no way limited thereto. That is, materials, used amounts, ratios, treatment contents, and treatment procedures and the like shown in the following Examples can be appropriately changed. Various values specified in the following Examples for production conditions and evaluation results have meaning as preferable upper limits or preferable lower limits in embodiments of the present invention, and a preferable range may be defined by a combination of the upper or lower limit described above and a value specified in one of the following Examples or values specified in different Examples.

### (Example 1)

An alumina powder having a D50 particle size of 28 µm and a BET specific surface area of 141 m²/g was impregnated with an aqueous solution of palladium nitrate, and then fired at 500°C for 1 hour, to obtain a Pd-supporting alumina powder (Pd content: 8.6% by mass). A zirconia-lanthanum modified alumina powder having a D50 particle size of 29 µm and a BET specific surface area of 145 m²/g was impregnated with an aqueous solution of rhodium nitrate, and then fired at 500°C for 1 hour, to obtain a Rh-supporting zirconia lanthanum modified alumina powder (Rh content: 1.4% by mass).

0.5 kg of the obtained Pd-supporting alumina powder, 0.5 kg of the Rh-supporting zirconia lanthanum modified alumina powder, 2 kg of a ceria zirconia composite oxide powder having a D50 particle size of 10 µm and a BET specific surface area of 71 m²/g, 195 g of an aqueous solution of 46% lanthanum nitrate, and ion exchange water were mixed to obtain a mixture. The mixture was charged into a ball mill, where the mixture was milled until a catalyst powder had a predetermined particle size distribution, to obtain a catalyst slurry having a D90 particle size of 3.0 µm. The viscosity of the catalyst slurry was measured under conditions of 60 rpm and 25°C using a B-type viscometer (RB-80L, manufactured by Toki Sangyo Co., Ltd.). The viscosity measured was 38 mPa·s.

Then, a wall flow type honeycomb substrate was prepared, which was made of cordierite (number of cells / thickness: 47 cells per cm² / 0.02 cm (300 cpsi/0.08 mil), diameter: 118.4 mm, total length: 127 mm, porosity: 65%). By immersing an exhaust gas inflow-side end of the substrate in a catalyst slurry, and subjecting the side of its opposite end to reduced-pressure suction, the catalyst slurry was impregnated and retained in a substrate end. Gas was caused to flow into the substrate from the side of the end face in which the catalyst slurry was impregnated and retained, to coat the catalyst slurry on the surface of pores in a partition wall, and to blow off the excess catalyst slurry from an outflow-side end of the gas. Then, the substrate on which the catalyst slurry was coated was dried at 150°C while gas was caused to flow into the substrate from the end face on the side of the inflow-side cell. Then, the substrate was fired at 550°C in an air atmosphere. Thereby, an exhaust gas purifying catalyst was produced, which had catalyst layer having catalytic metals biasedly located toward the side of the inflow-side cell in a thickness direction from the sealed open end to the exhaust gas inflow-side open end. In the exhaust gas purifying catalyst, the catalyst layer were entirely formed over a total length L_{W} of a wall flow type substrate 10 in the extending direction (length direction) of the partition wall. The coating amount of the catalyst layer after firing was 60.9 g per substrate 1L (excluding the weight of a platinum group metal).

### (Example 2)

An exhaust gas purifying catalyst was produced by the same operation as that of Example 1 except that a substrate on which a catalyst slurry was coated was dried at 150°C while gas was caused to flow into the substrate from an end face on the side of an outflow-side cell. Thereby, an exhaust gas purifying catalyst was produced, which had catalyst layer having catalytic metals biasedly located toward the side of the outflow-side cell in a thickness direction from a sealed open end to an exhaust gas outflow-side open end. In the exhaust gas purifying catalyst, the catalyst layer were entirely formed over a total length L_{W} of a wall flow type substrate 10 in the extending direction (length direction) of a partition wall. The coating amount of the catalyst layer after firing was 60.9 g per substrate 1L (excluding the weight of a platinum group metal).

### (Example 3)

An exhaust gas purifying catalyst was produced by the same operation as that of Example 1 except that a substrate on which a catalyst slurry was coated was dried at 150°C while gas was caused to flow into the substrate alternately from both an end face on the side of an inflow-side cell and an end face on the side of an outflow-side cell. Thereby, an exhaust gas purifying catalyst was produced, which had catalyst layer having catalytic metals biasedly located toward the side of an inflow-side cell in a thickness direction from an exhaust gas inflow-side open end to a central portion of a partition wall and catalyst layer having catalytic metals biasedly located toward the side of an outflow-side cell in the thickness direction from an exhaust gas outflow-side open end to the central portion of the partition wall. In the exhaust gas purifying catalyst, the catalyst layer was entirely formed over a total length L_{W} of a wall flow type substrate 10 in the extending direction (length direction) of a partition wall. The coating amount of the catalyst layer after firing was 60.9 g per substrate 1L (excluding the weight of a platinum group metal).

### [Measurement of Particle Size Distribution]

The D90 particle size of the catalyst slurry was measured by a laser scattering method using a laser diffraction particle size analyzer SALD-3100 manufactured by Shimadzu Corporation.

### [Observation of Coat State]

A sample (1 cm³) for measurement of a scanning electron microscope (SEM) was produced from the partition wall of each of the exhaust gas purifying catalysts produced in Example and Comparative Examples. The sample for measurement was embedded in a resin, and subjected to vapor deposition as a pretreatment. The sample for measurement after the pretreatment was observed using a scanning electron microscope (trade name: ULTRA55, manufactured by Carl Zeiss Corporation), and the state of the catalyst supported on the substrate was confirmed. As a result, in Examples 1 to 3, as shown in Figures 3 to 5, it was found that an exhaust gas purifying catalyst having biased catalytic metals is readily obtained.

### Industrial Applicability

An exhaust gas purifying catalyst obtained by a producing method of the present invention removes a particulate material contained in exhaust gas of a gasoline engine, whereby the exhaust gas purifying catalyst can be widely and effectively utilized. The exhaust gas purifying catalyst obtained by the producing method of the present invention removes a particulate material contained in exhaust gas of not only the gasoline engine but also a diesel engine, a jet engine, a boiler, or a gas turbine or the like, whereby the exhaust gas purifying catalyst can be effectively utilized.

### Reference Signs List

- 10: wall flow type substrate
- 11: inflow-side cell
- 11a: exhaust gas inflow-side end
- 12: outflow-side cell
- 12a: exhaust gas outflow-side end
- 13: partition wall
- 21: catalyst layer
- 21a: catalyst slurry
- 21a': dried catalyst slurry
- 100: exhaust gas purifying catalyst

## Claims

1. A method for producing an exhaust gas purifying catalyst for purifying exhaust gas discharged from an internal combustion engine, the method comprising:
a step of preparing a wall flow type substrate in which an inflow-side cell having an open at an exhaust gas inflow-side end, and an outflow-side cell adjacent to the inflow-side cell and having an open exhaust gas outflow-side end are separated by a porous partition wall;
a coating step of coating a catalyst slurry containing a catalytic metal on the partition wall;
a drying step of introducing gas into the wall flow type substrate to dry the coated catalyst slurry; and
a firing step of firing the dried catalyst slurry to form a catalyst layer,
wherein, by introducing the gas from the exhaust gas inflow-side end or the exhaust gas outflow-side end, or alternately from both the exhaust gas inflow-side end and the exhaust gas outflow-side end in the drying step, the dried catalyst slurry is biasedly located toward a side of the inflow-side cell or the outflow-side cell into which the gas has been introduced, in a thickness direction of the partition wall.

2. The method for producing an exhaust gas purifying catalyst according to claim 1, wherein the catalyst slurry is coated on the entire partition wall in the coating step.

3. The method for producing an exhaust gas purifying catalyst according to claim 1 or 2, wherein, by introducing the gas only from the exhaust gas inflow-side end in the drying step, the dried catalyst slurry is biasedly located toward the side of the inflow-side cell into which the gas has been introduced, in the thickness direction of the partition wall.

4. The method for producing an exhaust gas purifying catalyst according to claim 1 or 2, wherein, by introducing the gas only from the exhaust gas outflow-side end in the drying step, the dried catalyst slurry is biasedly located toward the side of the outflow-side cell into which the gas has been introduced, in the thickness direction of the partition wall.

5. The method for producing an exhaust gas purifying catalyst according to claim 1 or 2, wherein, by introducing the gas alternately from both the exhaust gas inflow-side end and the exhaust gas outflow-side end in the drying step, the dried catalyst slurry is biasedly located toward the side of the outflow-side cell close to the exhaust gas inflow-side end into which the gas has been introduced, in the thickness direction of the partition wall, and the dried catalyst slurry is biasedly located toward the side of the outflow-side cell close to the exhaust gas outflow-side end into which the gas has been introduced.

6. The method for producing an exhaust gas purifying catalyst according to any one of claims 1 to 5, wherein the catalyst slurry has a viscosity of 5 to 85 mPa·s.

7. The method for producing an exhaust gas purifying catalyst according to any one of claims 1 to 6, wherein the catalyst slurry has a solid content rate of 1 to 50% by mass.

8. The method for producing an exhaust gas purifying catalyst according to any one of claims 1 to 7, wherein the internal combustion engine is a gasoline engine.

## Patentansprüche

1. Verfahren zur Herstellung eines Abgasreinigungskatalysators zum Reinigen von Abgasen, die aus einem Verbrennungsmotor ausgestoßen werden, wobei das Verfahren umfasst:
einen Zubereitungsschritt eines Wandströmungssubstrats, bei dem eine Einströmungsseitenzelle eine Öffnung an einem Abgas-Einströmungsende aufweist, und eine Ausströmungsseitenzelle, die an die Einströmungsseitenzelle angrenzt und eine Öffnung an einem Abgas-Ausströmungsseite aufweist, durch eine poröse Trennwand voneinander getrennt sind;
einen Beschichtungsschritt zum Beschichten der Trennwand mit einer Katalysatorsuspension, die ein katalytisches Metall enthält;
einen Trocknungsschritt zum Einleiten von Gas in das Wandströmungssubstrats, um die beschichtete Katalysatorsuspension zu trocknen; und
einen Brennschritt zum Brennen der getrockneten Katalysatorsuspension, um eine Katalysatorschicht zu bilden,
wobei durch Einleiten des Gases aus dem Abgas-Einströmungsende oder dem Abgas-Ausströmungsende oder alternativ aus dem Abgas-Einströmungsende und dem Abgas-Ausströmungsende in den Trocknungsschritt eingeführt wird, die getrocknete Katalysatorsuspension in Dickenrichtung der Trennwand zu einer Seite der Einströmungsseitenzelle oder der Ausströmungsseitenzelle, in die das Gas eingeführt wurde, einseitig lokalisiert wird.

2. Verfahren zur Herstellung eines Abgasreinigungskatalysators nach Anspruch 1, wobei die Katalysatorsuspension in dem Beschichtungsschritt auf die gesamte Trennwand aufgetragen wird.

3. Verfahren zur Herstellung eines Abgasreinigungskatalysators nach Anspruch 1 oder 2, wobei durch Einleiten des Gases nur von der Abgas-Einströmungsseite in der Trocknungsstufe die getrocknete Katalysatorsuspension in der Dicke der Trennwand in Richtung der Zelle der Einströmungsseite, in die das Gas eingeleitet wurde, einseitig lokalisiert wird.

4. Verfahren zur Herstellung eines Abgasreinigungskatalysators nach Anspruch 1 oder 2, wobei durch Einleiten des Gases nur von der Abgasauslassseite in der Trocknungsschritt die getrocknete Katalysatorsuspension in Dickenrichtung der Trennwand zur Seite der Zelle hin, in die das Gas eingeleitet wurde, vorverlegt wird.

5. Verfahren zur Herstellung eines Abgasreinigungskatalysators gemäß Anspruch 1 oder 2, wobei, durch Einleiten des Gases abwechselnd sowohl vom Abgas-Einströmungsende als auch vom Abgas-Ausströmungsende in dem Trocknungsschritt die getrocknete Katalysatorsuspension in Richtung der Ausströmungsseitenzelle nahe dem Abgas-Einströmungsende, in das das Gas eingeleitet wurde, in Dickenrichtung der Trennwand, einseitig lokalisiert wird, und die getrocknete Katalysatorsuspension in Richtung der Zelle auf der Ausströmungsseitenzelle nahe dem Abgasausströmungsende, in das das Gas eingeleitet wurde, einseitig lokalisiert wird.

6. Verfahren zur Herstellung eines Abgasreinigungskatalysators nach einem der Ansprüche 1 bis 5, wobei die Katalysatorsuspension eine Viskosität von 5 bis 85 mPa·s aufweist.

7. Verfahren zur Herstellung eines Abgasreinigungskatalysators nach einem der Ansprüche 1 bis 6, wobei die Katalysatorsuspension einen Feststoffgehalt von 1 bis 50 Massen-% aufweist.

8. Verfahren zur Herstellung eines Abgasreinigungskatalysators nach einem der Ansprüche 1 bis 7, wobei der Verbrennungsmotor ein Benzinmotor ist.

## Revendications

1. Procédé de production d'un catalyseur de purification des gaz d'échappement pour purifier les gaz d'échappement rejetés par un moteur à combustion interne, le procédé comprenant :
une étape de préparation d'un substrat de type à écoulement mural dans lequel une cellule côté entrée ayant une ouverture à une extrémité côté entrée des gaz d'échappement, et une cellule côté sortie adjacente à la cellule côté entrée et ayant une extrémité ouverte côté sortie des gaz d'échappement sont séparées par une paroi de séparation poreuse ;
une étape de revêtement consistant à revêtir une boue de catalyseur contenant un métal catalytique sur la paroi de séparation ;
une étape de séchage consistant à introduire du gaz dans le substrat de type à écoulement mural pour sécher la boue de catalyseur revêtue ; et
une étape de cuisson consistant à cuire la boue de catalyseur séchée pour former une couche de catalyseur,
dans lequel, en introduisant le gaz par l'extrémité côté entrée des gaz d'échappement ou par l'extrémité côté sortie des gaz d'échappement, ou alternativement par l'extrémité côté entrée des gaz d'échappement et par l'extrémité côté sortie des gaz d'échappement dans l'étape de séchage, la boue de catalyseur séchée est positionnée de manière biaisée vers un côté de la cellule côté entrée ou de la cellule côté sortie dans laquelle le gaz a été introduit, dans le sens de l'épaisseur de la paroi de séparation.

2. Procédé de production d'un catalyseur de purification des gaz d'échappement selon la revendication 1, dans lequel la boue de catalyseur est appliquée sur toute la paroi de séparation lors de l'étape de revêtement.

3. Procédé de production d'un catalyseur de purification des gaz d'échappement selon la revendication 1 ou 2, dans lequel, en introduisant le gaz uniquement à partir de l'extrémité côté entrée des gaz d'échappement dans l'étape de séchage, la boue de catalyseur séchée est positionnée de manière biaisée vers le côté de la cellule côté entrée dans laquelle le gaz a été introduit, dans le sens de l'épaisseur de la paroi de séparation.

4. Procédé de production d'un catalyseur de purification des gaz d'échappement selon la revendication 1 ou 2, dans lequel, en introduisant le gaz uniquement par l'extrémité côté sortie des gaz d'échappement dans l'étape de séchage, la boue de catalyseur séchée est positionnée de manière biaisée vers le côté de la cellule côté sortie dans laquelle le gaz a été introduit, dans le sens de l'épaisseur de la paroi de séparation.

5. Procédé de production d'un catalyseur de purification des gaz d'échappement selon la revendication 1 ou 2, dans lequel, en introduisant le gaz alternativement à la fois par l'extrémité côté entrée des gaz d'échappement et par l'extrémité côté sortie des gaz d'échappement dans l'étape de séchage, la boue de catalyseur séchée est positionnée de manière biaisée vers le côté de la cellule côté sortie proche de l'extrémité côté entrée des gaz d'échappement dans laquelle le gaz a été introduit, dans le sens de l'épaisseur de la paroi de séparation, et la boue de catalyseur séchée est positionnée de manière biaisée vers le côté de la cellule côté sortie proche de l'extrémité côté sortie des gaz d'échappement dans laquelle le gaz a été introduit.

6. Procédé de production d'un catalyseur de purification des gaz d'échappement selon l'une quelconque des revendications 1 à 5, dans lequel la boue de catalyseur a une viscosité de 5 à 85 mPa×s.

7. Procédé de production d'un catalyseur de purification des gaz d'échappement selon l'une quelconque des revendications 1 à 6, dans lequel la boue de catalyseur a une teneur en solides de 1 à 50 % en masse.

8. Procédé de production d'un catalyseur de purification des gaz d'échappement selon l'une quelconque des revendications 1 à 7, dans lequel le moteur à combustion interne est un moteur à essence.
